# EUROPÄISCHE PATENTSCHRIFT

(11) **EP 1 085 646 B1**
(45) Veröffentlichungstag und Bekanntmachung des Hinweises auf die Patenterteilung: **23.04.2003**
(21) Anmeldenummer: 00117792.2
(22) Anmeldetag: 18.08.2000
(51) Int. Cl.: H02M 3/22

(54) **Gleichspannungswandler**
DC/DC converter
Convertisseur DC/DC

(30) Priorität: 13.09.1999 DE 19943575
(43) Veröffentlichungstag der Anmeldung: 21.03.2001
(73) Patentinhaber: Siemens Aktiengesellschaft, 80333 München (DE)
(72) Erfinder: Berberich, Reinhold, 60439 Frankfurt (DE); Fürbeth, Andreas, 65812 Bad Soden (DE)

(56) Entgegenhaltungen:
- EP-A- 0 771 063
- US-A- 5 436 825

## Beschreibung

Bei der Verbindung zweier Gleichspannungsnetze kann ein Energiefluß alternativ in beiden Richtungen erforderlich sein. So wird beispielsweise in Kraftfahrzeugen zusätzlich zu dem bestehenden 14V-Netz ein 42V-Netz eingeführt, um weitere Verbraucher mit höheren Leistungsaufnahmen versorgen zu können. Je nach Betriebszustand kann es erforderlich sein, Energie von dem 14V-Netz in das 42V-Netz oder umgekehrt zu übertragen. Dazu ist an sich jeweils ein Gleichspannungswandler erforderlich, für den verschiedene Schaltungsprinzipien bekannt sind, beispielsweise der sogenannte parallelgespeiste Gegentakt-Durchflußwandler (Push-Pull-Converter).

Diese Wandler arbeiten primär- und sekundärseitig im Gegentaktbetrieb und zeichnen sich durch einen guten Wirkungsgrad und eine einfache Ansteuerung der Halbleiterschalter aus. Sekundärseitig erfolgt die Gleichrichtung im Gegentakt durch zwei mit den Wicklungsenden verbundene Dioden, die auf ein L/C-Siebglied arbeiten.

Diese bekannten Wandler haben jedoch den Nachteil, jeweils nur in einer Wirkungsrichtung (Energieübertragungsrichtung) nutzbar zu sein, so daß zwei der bekannten Gleichspannungswandler zur Verbindung der Gleichspannungsnetze erforderlich sind.

Aus dem Dokument JP 6 245 501, Patent Abstracts of Japan, E1639 ist ein Gleichspannungswandler mit den Merkmalen des Oberbegriffs des Anspruchs 1 bekannt geworden.

Aufgabe der vorliegenden Erfindung ist es, gegenüber diesem bekannten Stand der Technik sowohl Kosten- als auch Gewichtseinsparungen bei der Verbindung beider Gleichspannungsnetze zu ermöglichen.

Diese Aufgabe wird erfindungsgemäß durch die kennzeichnenden Merkmale des Anspruchs 1 gelöst.

Die Erfindung hat den Vorteil, daß mit einem Gleichspannungswandler eine Umkehrung der Wirkungsrichtung unter Ausnutzung derselben induktiven Komponenten erfolgen kann. Ferner können bei der Erfindung dieselben Halbleiterschalter als primärseitige Schalter und als sekundärseitige Gleichrichter je nach Wirkungsrichtung betrieben werden.

Vorzugsweise ist bei dem erfindungsgemäßen Gleichspannungswandler vorgesehen, daß die Mittelanzapfungen über jeweils eine Drossel mit dem jeweiligen ersten Gleichspannungsanschluß verbunden sind und daß die zweiten Gleichspannungsanschlüsse auf Massepotential liegen und mit jeweils einem Kondensator mit den ersten Anschlüssen verbunden sind. Es ist vorteilhaft, wenn an dem jeweils ersten Anschluß Gleichspannungen gleicher Polarität anliegen.

Vorzugsweise sind bei dem erfindungsgemäßen Gleichspannungswandler die Halbleiterschalter Feldeffekttransistoren, insbesondere sogenannte MOS-FETs.

Grundsätzlich kann bei dem erfindungsgemäßen Gleichspannungswandler eine automatische Umschaltung der Wirkungsrichtung in Abhängigkeit von der Größe der anliegenden Gleichspannungen erfolgen. Ohne weitere Maßnahmen setzt dies wegen der Transformatorverluste und der damit verbundenen Abweichung des wirksamen Übersetzungsverhältnisses gegenüber dem Verhältnis der Windungszahlen eine deutliche Abweichung des Verhältnisses der Gleichspannungen von dem Verhältnis der Windungszahlen voraus. Soll die Wirkungsumkehr jedoch bereits bei geringeren Abweichungen erfolgen, kann gemäß einer Weiterbildung vorgesehen sein, daß zur Umschaltung der Wirkungsrichtung das Übersetzungsverhältnis umschaltbar ist.

Eine erste vorteilhafte Ausgestaltung dieser Weiterbildung besteht darin, daß eine der Wicklungen jeweils symmetrisch über die weiteren Wicklungsanschlüsse hinaus verlängert ist, daß die Endanschlüsse der verlängerten Wicklungen über weitere Halbleiterschalter mit dem zweiten Anschluß für die jeweilige Gleichspannung verbunden sind und daß die Ansteuerung der weiteren Halbleiterschalter alternativ mit der Ansteuerung der Halbleiterschalter für die gleiche Gleichspannung in Abhängigkeit von der Wirkungsrichtung erfolgt Durch die Wahl der Windungen zwischen den weiteren Wicklungsanschlüssen und den Endanschlüssen in Bezug auf die anderen Windungszahlen kann dieser Gleichspannungswandler sehr gut an die jeweiligen Verhältnisse angepaßt werden.

Bei diesem Gleichspannungswandler kann in vorteilhafter Weise vorgesehen sein, daß die weiteren Halbleiterschalter über einen Übertrager steuerbar sind und/oder daß die weiteren Halbleiterschalter aus je einer Reihenschaltung aus zwei Feldeffekttransistoren bestehen.

Bei einer zweiten vorteilhaften Ausgestaltung der Weiterbildung ist vorgesehen, daß die weiteren Wicklungsanschlüsse, vorzugsweise die Enden, einer der Wicklungen ferner über weitere Halbleiterschalter mit dem ersten Anschluß verbunden sind, wobei die Ansteuerung der weiteren Halbleiterschalter in Abhängigkeit von der Wirkungsrichtung und gegenphasig zur Ansteuerung des jeweils mit dem gleichen Wicklungsanschluß verbundenen Halbleiterschalters erfolgt, und daß die Mittelanzapfung der gleichen Wicklung über einen dritten Halbleiterschalter in Abhängigkeit von der Wirkungsrichtung mit dem ersten Anschluß verbindbar ist, wobei die Ansteuerung der weiteren Halbleiterschalter unterbleibt, wenn der dritte Halbleiterschalter leitend ist. Hierbei können die weiteren Halbleiterschalter und der dritte Halbleiterschalter aus je einer Reihenschaltung aus zwei Feldeffekttransistoren bestehen.

Eine dritte vorteilhafte Ausgestaltung der Weiterbildung zeichnet sich durch einen geringen Aufwand aus und besteht darin, daß die weiteren Wicklungsanschlüsse, vorzugsweise die Enden, einer der Wicklungen ferner über Gleichrichterdioden mit dem ersten Anschluß verbunden sind und daß die Mittelanzapfung der gleichen Wicklung über einen dritten Halbleiterschalter in Abhängigkeit von der Wirkungsrichtung mit dem ersten Anschluß verbindbar ist.

Die Erfindung läßt zahlreiche Ausführungsformen zu. Eine davon ist schematisch in der Zeichnung anhand mehrerer Figuren dargestellt und nachfolgend beschrieben. Es zeigt:
- Figur 1: ein erstes Ausführungsbeispiel,
- Figur 2: ein zweites Ausführungsbeispiel,
- Figur 3: ein drittes Ausführungsbeispiel,
- Figur 4: ein viertes Ausführungsbeispiel,
- Figur 5: ein fünftes Ausführungsbeispiel.

Gleiche Teile sind in den Figuren mit gleichen Bezugszeichen versehen. Eine Ansteuerungsschaltung ist dabei jeweils als Blockschaltbild dargestellt. Nicht zur Erläuterung der Erfindung erforderliche Einzelheiten sind der Übersichtlichkeit halber fortgelassen, beispielsweise eine Schutzbeschaltung der Feldeffekttransistoren.

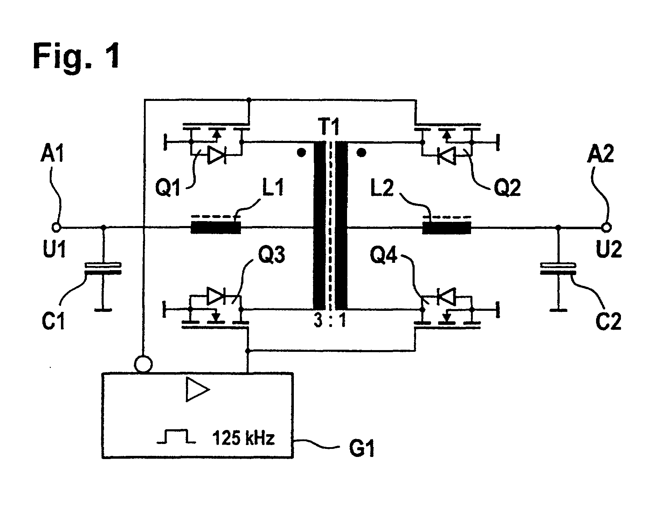

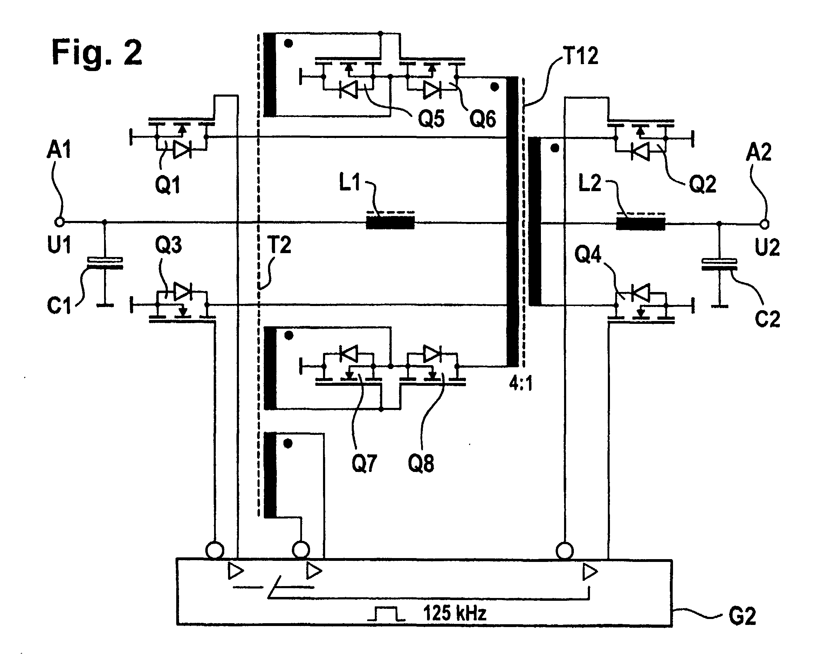

Während die Schaltungsanordnung nach Figur 1 auch bezüglich der beiden Gleichspannungen U1, U2 symmetrisch ist, sind bei den Ausführungsbeispielen nach den Figuren 2, 3, 4 und 5 Schaltungsmaßnahmen zur Umschaltung des Übersetzungsverhältnisses auf der Seite von U1 dargestellt. Es bleibt jedoch dem Fachmann überlassen, auf welcher Seite diese Schaltungsmaßnahmen durchgeführt werden sollen.

Bei dem Ausführungsbeispiel nach Figur 1 ist ein Transformator T1 mit einem Verhältnis der Windungszahlen von 3 : 1 vorgesehen. Die Wicklungsenden sind jeweils über einen Feldeffekttransistor Q1, Q2, Q3, Q4 an Massepotential angeschlossen. Die Mittelanzapfungen sind über jeweils eine Drossel L1, L2 mit Anschlüssen A1, A2 für die Spannungen U1 und U2 verbunden. In dem oben erwähnten Bordnetz für Kraftfahrzeuge sind die Nennwerte für U1 = 42V und U2 = 14V. Ein Steuergenerator G1 erzeugt Rechteckimpulse mit einer Frequenz von 125 kHz, die den Steuerelektroden der Feldeffekttransistoren Q3 und Q4 und gegenphasig dazu den Steuerelektroden der Feldeffekttransistoren Q1 und Q2 zugeführt werden. Dabei kann - wie bei bekannten Gleichspannungswandlem - eine Impulsbreitensteuerung erfolgen.

Bei der Funktionsbetrachtung der Schaltungsanordnung sind folgende Fälle zu unterscheiden:

### 1. U1 > 3 · U2

Damit wird U1 zur Eingangsspannung, die über die Drossel L1 an den Mittelabgriff der Primärwicklung des Transformators T1 gelangt. Die Feldeffekttransistoren Q1 und Q3 werden abwechselnd vom Generator G1 in den leitenden Zustand gesteuert und schalten den Stromfluß abwechselnd durch die obere und die untere Hälfte der linken Wicklung, die in diesem Betriebsfall als Primärwicklung dient, gegen Masse. Dadurch wird im Transformator T1 ein magnetisches Wechselfeld erzeugt, das in der Sekundärwicklung einen entsprechenden Stromfluß induziert. Die Feldeffekttransistoren Q2 und Q4 werden jeweils gemeinsam mit den Feldeffekttransistoren Q1 und Q3 angesteuert und wirken somit als Synchrongleichrichter. Die resultierenden Stromhalbwellen laden abwechselnd über Q2 und L2 bzw. Q4 und L2 einen Kondensator C2 auf die Ausgangsspannung U2 auf, wobei die Drossel L2 und der Kondensator C2 als Siebglied dienen. U2 folgt damit der Eingangsspannung U1 ungefähr im Verhältnis 3:1.

### 2. U1 < 3 · U2

In diesem Fall kehrt sich die Wirkungsrichtung um, wobei die Ansteuerung der Feldeffekttransistoren genau wie beim ersten Fall erfolgt. Dabei schalten die Feldeffekttransistoren Q2 und Q4 den Strom vom Anschluß A2 abwechselnd gegen Masse, während die Feldeffekttransistoren Q1 und Q3 als Synchrongleichrichter arbeiten. Die Spannung U1 folgt der Spannung U2 ungefähr im Verhältnis 1 : 3.

### 3. U1 ≈ 3 · U2

Die Schaltungsanordnung arbeitet im ausgeglichenen Zustand als Stromwaage. Der resultierende Strom fließt immer von der Seite der höheren Spannung in Richtung zur geringeren Spannung, wodurch ein Ausgleichsvorgang stattfindet. Die Stromrichtung und damit die Wirkungsrichtung der Schaltung als Aufwärts- oder Abwärtswandler kehren sich automatisch um.

Das resultierende Übersetzungsverhältnis U1 : U2 hängt von den Verlusten der Schaltung ab und ist deshalb nicht in beiden Wirkungsrichtungen reziprok zueinander. Ist die Erzeugung definierter Ausgangsspannungen in beiden Richtungen erforderlich, kann dies mit einer Pulsbreitenmodulation des Steuergenerators erfolgen. Zur Regelung ist jedoch eine gewisse Regelreserve erforderlich; das heißt, die maximal erzeugbare Ausgangsspannung muß größer sein als die jeweils auszuregelnde Spannung. Dies kann mit unterschiedlichen Übertragungsverhältnissen des Transformators verwirklicht werden. So kommt beispielsweise im Abwärtsbetrieb ein Verhältnis der Windungszahlen von 2 : 1 und im Aufwärtsbetrieb ein Verhältnis von 1: 4 in Frage. Bei diesem Betrieb des erfindungsgemäßen Gleichspannungswandlers ist deshalb eine Möglichkeit zur Umschaltung des Übersetzungsverhältnisses des Transformators erforderlich.

Dies wird bei dem Ausführungsbeispiel nach Figur 2 dadurch ermöglicht, daß eine Wicklung - in Figur 2 die linke Wicklung - des Transformators T12 mit weiteren Windungen und Endanschlüssen versehen ist, welche über weitere Halbleiterschalter mit Massepotential verbindbar sind. Diese weiteren Halbleiterschalter werden aus jeweils einer Reihenschaltung zweier Feldeffekttransistoren Q5, Q6 bzw. Q7, Q8 gebildet. Die Windungszahl der gesamten linken Wicklung beträgt beim Ausführungsbeispiel das Vierfache derjenigen der rechten Wicklung, während die Zahl der Windungen zwischen den mit den Feldeffekttransistoren Q1 und Q3 verbundenen Anzapfungen das Doppelte der Windungszahl der rechten Wicklung beträgt.

Für eine Wandlung mit einer Wirkungsrichtung von links nach rechts - wegen des obengenannten Zahlenbeispiels im folgenden auch Abwärtswandlung genannt - wird das niedrigere Übersetzungsverhältnis benötigt. Dementsprechend werden, wie bei der Schaltungsanordnung nach Figur 1, die Feldeffekttransistoren Q1 und Q3 getaktet. Da an den nicht angesteuerten Enden der Primärwicklung des Transformators T12 durch die Gegeninduktion sehr hohe Spannungen entstehen, wird bei der Schaltungsanordnung nach Figur 2 sichergestellt, daß die hier angeschlossenen Halbleiterschalter sicher sperren. Aus diesem Grunde bestehen diese Halbleiterschalter aus jeweils zwei gegensinnig in Reihe geschalteten Feldeffekttransistoren Q5, Q6 bzw. Q7, Q8, die galvanisch entkoppelt über einen Übertrager T2 angesteuert werden.

Für die Aufwärtswandlung wird das volle Übersetzungsverhältnis 1 : 4 benötigt. Daher werden die Feldeffekttransistoren Q2 und Q4 als Wechselrichter getaktet und Q5, Q6, Q7 und Q8 als Synchrongleichrichter betrieben. Die Feldeffekttransistoren Q1 und Q3 sind dann nichtleitend. Eine entsprechende Umschaltung ist bei der Darstellung des Steuergenerators G2 in Figur 2 angedeutet.

Diese Umschaltung kann im Steuergenerator G2 in Abhängigkeit vom Ergebnis einer Differenzmessung der mit dem Übersetzungsverhältnis bewerteten Spannungen U1 und U2 erfolgen. Die Umschaltung ist jedoch auch aufgrund von anderen Betriebsgrößen möglich, wobei intelligente Steuergeräte eingesetzt werden können. Zur genaueren Steuerung des effektiven Übersetzungsverhältnisses, um geregelte Spannungen in beiden Wirkungsrichtungen zu erhalten, ist im Steuergenerator G2 ebenfalls eine Pulsbreitenmodulation anwendbar.

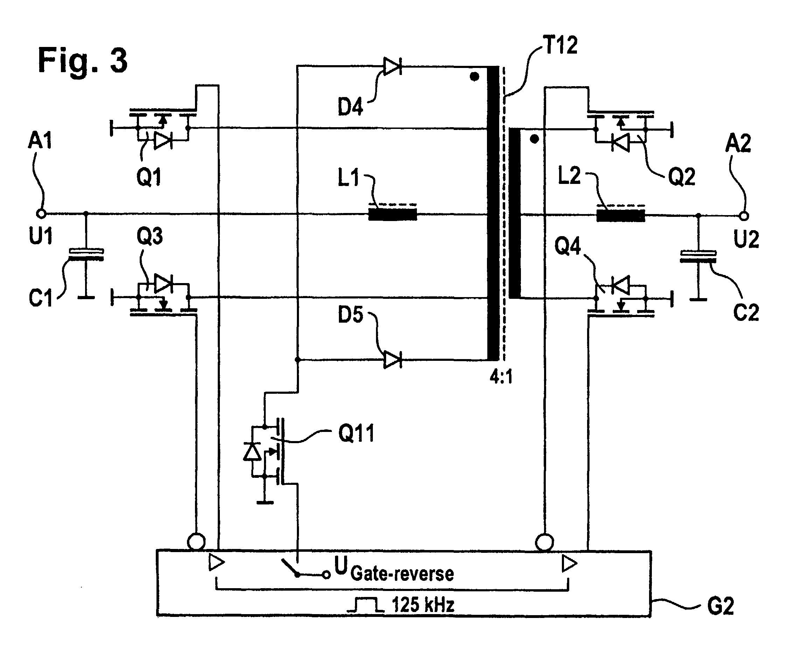

Eine einfachere und komfortablere Ausführung ist in Figur 3 dargestellt. Dabei sind die Feldeffekttransistoren Q6 bzw. Q8 durch jeweils eine Diode D4 bzw. D5 ersetzt. Die Anodenanschlüsse bei der Diode D4 bzw. D5 sind mit einem Drain-Anschluß eines Feldeffekttransistors Q11 verbunden, welcher die Feldeffekttransistoren Q5 und Q7 der Figur 2 ersetzt. Der Source-Anschluß des Feldeffekttransistors Q11 liegt an GND, während das Gate mit U_{Gate-reverse} verbunden ist, welche vom Steuergenerator G2 bereitgestellt wird.

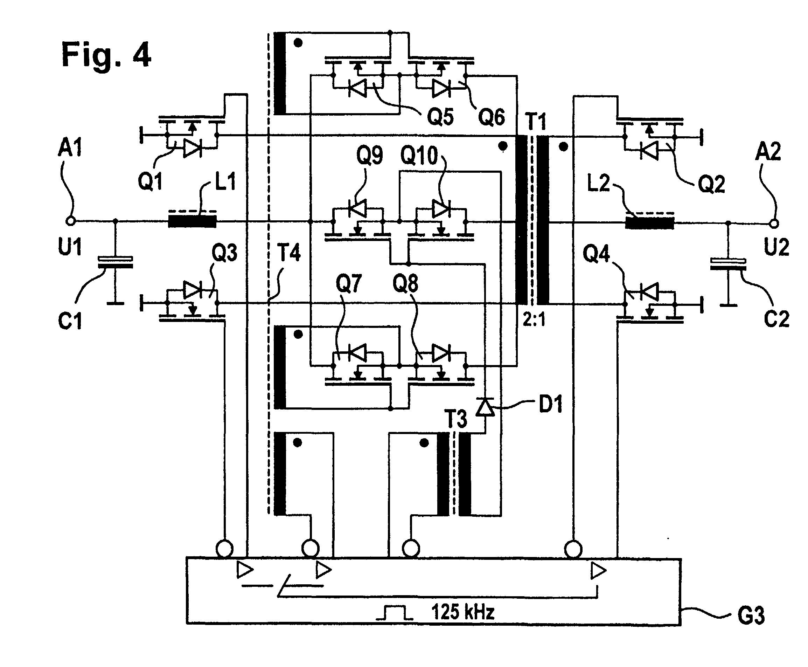

Bei dem Ausführungsbeispiel nach Figur 4 erfolgt die Umschaltung des Übersetzungsverhältnisses dadurch, daß die Primärwicklung des Transformators nur in Abwärtsrichtung mit dem Mittelabgriff betrieben wird. Dazu ist in die Zuleitung zum Mittelabgriff ein dritter Halbleiterschalter eingefügt, der wiederum aus zwei Feldeffekttransistoren Q9 und Q10 besteht. Diese werden ebenfalls potentialfrei über einen Übertrager T3 angesteuert. Da hier eine nicht pulsierende, statische Ansteuerung erforderlich ist, ist eine Diode zusammen mit nicht dargestellten Kapazitäten in dem Steuerkreis der Feldeffekttransistoren Q9, Q10 wirksam, so daß bei Zuführung von Impulsen über den Übertrager T3 an den Steuerelektroden der Feldeffekttransistoren Q9 und Q10 eine Gleichspannung anliegt, solange die Mittelanzapfung mit der Drossel L1 verbunden ist.

Zur Synchrongleichrichtung bei der Wandlung in Aufwärtsrichtung sind außer den Feldeffekttransistoren Q1 und Q3 weitere Feldeffekttransistoren Q5 bis Q8 vorgesehen, die paarweise in Reihe geschaltet abwechselnd die Wicklungsenden der linken Wicklung mit der Drossel L1 verbinden und somit einen Synchron-Brückengleichrichter bilden. Dadurch ist bei der Synchrongleichrichtung die gesamte Windungszahl der linken Wicklung wirksam, wodurch sich ein Übersetzungsverhältnis von 1 : 4 ergibt. Auch für die Ansteuerung der Feldeffekttransistoren Q5 bis Q8 ist eine galvanische Trennung mit Hilfe eines Übertragers T4 erforderlich.

Der Steuergenerator G3 ist bei dem Ausführungsbeispiel nach Figur 4 derart ausgebildet, daß je nach Wirkungsrichtung entweder die Ansteuerung der Feldeffekttransistoren Q5 bis Q8 oder die Steuerung der Feldeffekttransistoren Q9 und Q10 in den leitenden Zustand erfolgt.

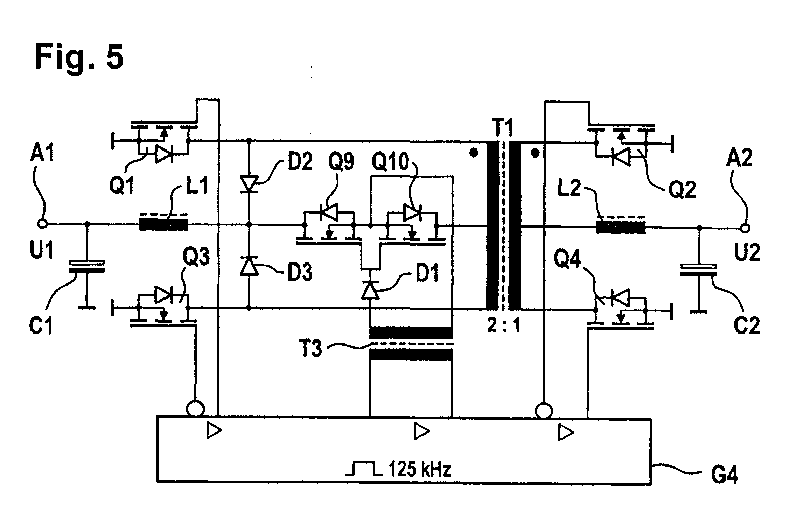

Figur 5 zeigt eine gegenüber der Schaltungsanordnung nach Figur 4 vereinfachte Schaltungsanordnung, wobei zur Gleichrichtung in Abwärtsrichtung zusätzlich zu den Feldeffekttransistoren Q1 und Q3 Gleichrichterdioden D2 und D3 vorgesehen sind. Damit vereinfacht sich auch der Steuergenerator G4 gegenüber dem Steuergenerator G3 (Figur 4).

Der erfindungsgemäße Gleichspannungswandler läßt sich in vorteilhafter Weise als sogenanntes Power-Management-Modul für ein 42V/14V-Kraftfahrzeugbordnetz mit folgenden Funktionen einsetzen:
1. Wandlung der 42V-Generatorspannung in die 14V-Netzspannung zur Ladung der 14V-Fahrzeugbatterie und zur Versorgung der 14V-Verbraucher,
2. Wandlung der 14V-Batteriespannung in die 42V-Netzspannung zur Ladung der 42V-Starterbatterien, zur Versorgung der 42V-Verbraucher bei Fahrzeugstillstand und zur Notversorgung des 42V-Netzes bei Ausfall des Generators und der 42V-Batterie,
3. mit automatischer Umschaltung der Wirkungsrichtung, je nach Betriebszustand.

Eine weitere Anwendung kann in einer dezentralen Notstromversorgung für Personalcomputer, medizintechnische oder sicherheitstechnische Einrichtungen bestehen, wobei folgende Funktionen erfüllt werden:
1. Wandlung der gleichgerichteten und gesiebten 230V-Netzspannung in eine niedrigere Gleichspannung zur Ladung der Pufferbatterien,
2. Wandlung der Spannung der Pufferbatterien in eine rechteck- oder trapezförmige 230V-Netzspannung zur Versorgung der zu schützenden Einrichtung,
3. automatische Umschaltung der Wirkungsrichtung, je nach Betriebszustand.

## Patentansprüche

1. Gleichspannungswandler zum Erzeugen einer Gleichspannung aus einer zugeführten Gleichspannung mit umkehrbarer Wirkungsrichtung, wobei ein Transformator primärund sekundärseitig im Gegentakt arbeitet, wozu mindestens eine Sekundärwicklung und eine Primärwicklung vorgesehen sind, die jeweils eine Mittelanzapfung und weitere Wicklungsanschlüsse aufweisen, **dadurch gekennzeichnet, dass** die Mittelanzapfungen mit je einem ersten Anschluß (A1, A2) für die jeweilige Gleichspannung und die weiteren Wicklungsanschlüsse über je einen Halbleiterschalter (Q1 bis Q4) mit einem zweiten Anschluß für die jeweilige Gleichspannung verbunden sind, wobei die an eine Wicklung angeschlossenen Halbleiterschalter (Q1 bis Q4) synchron mit den an die andere Wicklung angeschlossenen Halbleiterschaltern gesteuert werden.

2. Gleichspannungswandler nach Anspruch 1, **dadurch gekennzeichnet, daß** die Mittelanzapfungen über jeweils eine Drossel (L1, L2) mit dem jeweiligen ersten Gleichspannungsanschluß (A1, A2) verbunden sind und daß die zweiten Gleichspannungsanschlüsse auf Massepotential liegen und mit jeweils einem Kondensator (C1, C2) mit den ersten Anschlüssen (A1, A2) verbunden sind.

3. Gleichspannungswandler nach einem der Ansprüche 1 oder 2, **dadurch gekennzeichnet, daß** an dem jeweils ersten Anschluß (A1, A2) Gleichspannungen gleicher Polarität anliegen.

4. Gleichspannungswandler nach einem der vorhergehenden Ansprüche, **dadurch gekennzeichnet, daß** die Halbleiterschalter Feldeffekttransistoren (Q1 bis Q4) sind.

5. Gleichspannungswandler nach einem der vorhergehenden Ansprüche, **dadurch gekennzeichnet, daß** zur Umschaltung der Wirkungsrichtung das Übersetzungsverhältnis umschaltbar ist.

6. Gleichspannungswandler nach Anspruch 5, **dadurch gekennzeichnet, daß** eine der Wicklungen jeweils symmetrisch über die weiteren Wicklungsanschlüsse hinaus verlängert ist, daß die Endanschlüsse der verlängerten Wicklungen über weitere Halbleiterschalter (Q5 bis Q8) mit dem zweiten Anschluß für die jeweilige Gleichspannung verbunden sind und daß die Ansteuerung der weiteren Halbleiterschalter (Q5 bis Q8) alternativ mit der Ansteuerung der Halbleiterschalter (Q1, Q3) für die gleiche Gleichspannung in Abhängigkeit von der Wirkungsrichtung erfolgt.

7. Gleichspannungswandler nach Anspruch 6, **dadurch gekennzeichnet, daß** die weiteren Halbleiterschalter (Q5 bis Q8) über einen Übertrager (T2) steuerbar sind.

8. Gleichspannungswandler nach einem der Ansprüche 6 oder 7, **dadurch gekennzeichnet, daß** die weiteren Halbleiterschalter aus je einer Reihenschaltung aus zwei Feldeffekttransistoren (Q5, Q6; Q7, Q8) bestehen.

9. Gleichspannungswandler nach Anspruch 5, **dadurch gekennzeichnet, daß** die weiteren Wicklungsanschlüsse, vorzugsweise die Enden, einer der Wicklungen femer über weitere Halbleiterschalter (Q5 bis Q8) mit dem ersten Anschluß (A1) verbunden sind, wobei die Ansteuerung der weiteren Halbleiterschalter (Q5 bis Q8) in Abhängigkeit von der Wirkungsrichtung und gegenphasig zur Ansteuerung des jeweils mit dem gleichen Wicklungsanschluß verbundenen Halbleiterschalters (Q1, Q3) erfolgt, und daß die Mittelanzapfung der gleichen Wicklung über einen dritten Halbleiterschalter (Q9, Q10) in Abhängigkeit von der Wirkungsrichtung mit dem ersten Anschluß verbindbar ist, wobei die Ansteuerung der weiteren Halbleiterschalter (Q5 bis Q8) unterbleibt, wenn der dritte Halbleiterschalter (Q9, Q10) leitend ist.

10. Gleichspannungswandler nach Anspruch 9, **dadurch gekennzeichnet, daß** die weiteren Halbleiterschalter und der dritte Halbleiterschalter aus je einer Reihenschaltung aus zwei Feldeffekttransistoren (Q5, Q6; Q7, Q8; Q9, Q10) bestehen.

11. Gleichspannungswandler nach Anspruch 5, **dadurch gekennzeichnet, daß** die weiteren Wicklungsanschlüsse, vorzugsweise die Enden, einer der Wicklungen femer über Gleichrichterdioden (D2, D3) mit dem ersten Anschluß (A1) verbunden sind und daß die Mittelanzapfung der gleichen Wicklung über einen dritten Halbleiterschalter (Q9, Q10) in Abhängigkeit von der Wirkungsrichtung mit dem ersten Anschluß (A1) verbindbar ist.

12. Gleichspannungswandler nach Anspruch 6, **dadurch gekennzeichnet, daß** die weiteren Halbleiterschalter durch eine Kombination von Dioden und Transistoren gebildet werden, wobei je ein Endanschluß der Wicklung mit jeweils.einer Diode (D4, D5) verbunden ist.

13. Gleichspannungswandler nach Anspruch 12, **dadurch gekennzeichnet, daß** die Anoden der Dioden (D4, D5) mit einem Drain-Anschluß eines Transistors (Q11) verbunden sind, dessen Gate vom Steuergenerator (G2) geschaltet wird.

## Claims

1. DC/DC converter for producing a DC voltage from a supplied DC voltage with a reversible direction of action, a transformer operating in push-pull on the primary and secondary sides, for which purpose there are provided at least one secondary winding and one primary winding which each have a centre tap and further winding terminals, **characterized in that** the centre taps are each connected to a first terminal (A1, A2) for the respective DC voltage and the further winding terminals are each connected via a semiconductor switch (Q1 to Q4) to a second terminal for the respective DC voltage, the semiconductor switches (Q1 to Q4) connected to one winding being controlled synchronously with the semiconductor switches connected to the other winding.

2. DC/DC converter according to Claim 1, **characterized in** the centre taps are each connected via an inductor (L1, L2) to the respective first DC voltage terminal (A1, A2), and **in that** the second DC voltage terminals are at earth potential and are connected to the first terminals (A1, A2) via a capacitor (C1, C2) in each case.

3. DC/DC converter according to either of Claims 1 and 2, **characterized in that** DC voltages of the same polarity are present on the respective first terminal (A1, A2).

4. DC/DC converter according to one of the preceding claims, **characterized in that** the semiconductor switches are field effect transistors (Q1 to Q4).

5. DC/DC converter according to one of the preceding claims, **characterized in that** the transformation ratio can be changed over in order to change over the direction of action.

6. DC/DC converter according to Claim 5, **characterized in that** one of the windings is in each case lengthened symmetrically over the further winding terminals, **in that** the end terminals of the lengthened windings are connected via further semiconductor switches (Q5 to Q8) to the second terminal for the respective DC voltage, and **in that** the driving of the further semiconductor switches (Q5 to Q8) is carried out alternatively with the driving of the semiconductor switches (Q1, Q3) for the same DC voltage as a function of the direction of action.

7. DC/DC converter according to Claim 6, **characterized in that** the further semiconductor switches (Q5 to Q8) can be controlled via a transformer (T2).

8. DC/DC converter according to either of Claims 6 and 7, **characterized in that** the further semiconductors each comprise a series circuit of two field effect transistors (Q5, Q6; Q7, Q8).

9. DC/DC converter according to Claim 5, **characterized in that** the further winding terminals, preferably the ends, of one of the windings are also connected via further semiconductor switches (Q5 to Q8) to the first terminal (A1), the driving of the further semiconductor switches (Q5 to Q8) being carried out as a function of the direction of action and in antiphase with the driving of the semiconductor switch (Q1, Q3) in each case connected to the same winding terminal, and **in that** the centre tap of the same winding can be connected via a third semiconductor switch (Q9, Q10) to the first terminal as a function of the direction of action, the driving of the further semiconductor switches (Q5 to Q8) being suppressed when the third semiconductor switch (Q9, Q10) is conductive.

10. DC/DC converter according to Claim 9, **characterized in that** the further semiconductor switches and the third semiconductor switch each comprise a series circuit of two field effect transistors (Q5, Q6; Q7, Q8; Q9, Q10).

11. DC/DC converter according to Claim 5, **characterized in that** the further winding terminals, preferably the ends, of one of the windings are also connected via rectifier diodes (D2, D3) to the first terminal (A1), and **in that** the centre tap of the same winding can be connected via a third semiconductor switch (Q9, Q10) to the first terminal (A1), depending on the direction of action.

12. DC/DC converter according to Claim 6, **characterized in that** the further semiconductor switches are formed by a combination of diodes and transistors, each end terminal of the winding being connected to a diode (D4, D5) in each case.

13. DC/DC converter according to Claim 12, **characterized in that** the anodes of the diodes (D4, D5) are connected to a drain terminal of a transistor (Q11) whose gate is switched by the control generator (G2).

## Revendications

1. Convertisseur continu-continu destiné à générer une tension continue à partir d'une tension continue d'alimentation, avec réversibilité du sens de conversion, un transformateur fonctionnant de manière symétrique du côté primaire et secondaire pour le fonctionnement duquel il est prévu au moins un enroulement primaire et un enroulement secondaire, lesquels présentent respectivement une prise centrale et des bornes d'enroulement supplémentaires, **caractérisé en ce que** les prises centrales sont reliées chacune, pour la tension continue respective, à une première borne (A1, A2) et **en ce que** les bornes d'enroulement supplémentaires sont reliées chacune, pour la tension continue respective, à une deuxième borne par l'intermédiaire d'un commutateur à semi-conducteurs (Q1 à Q4), les commutateurs à semi-conducteurs (Q1 à Q4) connectés à un enroulement étant commandés de manière synchrone avec les commutateurs à semi-conducteurs connectés à l'autre enroulement.

2. Convertisseur continu-continu selon la revendication 1, **caractérisé en ce que** les prises centrales sont reliées chacune, par l'intermédiaire d'une self (L1, L2), à la première borne de tension continue respective (A1, A2) et **en ce que** les deuxièmes bornes de tension continue sont mises au potentiel de masse et sont reliées chacune, par l'intermédiaire d'un condensateur (C1, C2), aux premières bornes (A1, A2).

3. Convertisseur continu-continu selon l'une des revendications 1 ou 2, **caractérisé en ce qu'**à chaque première borne (A1, A2) se trouvent appliquées des tensions continues de même polarité.

4. Convertisseur continu-continu selon l'une des revendications précédentes, **caractérisé en ce que** les commutateurs à semi-conducteurs sont des transistors à effet de champ (Q1 à Q4).

5. Convertisseur continu-continu selon l'une des revendications précédentes, **caractérisé en ce que** le rapport de transformation est commutable pour permettre la commutation du sens de conversion.

6. Convertisseur continu-continu selon la revendication 5, **caractérisé en ce que** l'un des enroulements est respectivement prolongé de manière symétrique au-delà des bornes d'enroulement supplémentaires, **en ce que** les bornes d'extrémité des enroulements prolongés sont reliées, par l'intermédiaire de commutateurs à semi-conducteurs supplémentaires (Q5 à Q8), à la deuxième borne pour la tension continue respective et **en ce que** l'activation des commutateurs à semi-conducteurs supplémentaires (Q5 à Q8) est effectuée alternativement avec l'activation des commutateurs à semi-conducteurs (Q1, Q3) pour la même tension continue, et ce, en fonction du sens de conversion.

7. Convertisseur continu-continu selon la revendication 6, **caractérisé en ce que** les commutateurs à semi-conducteurs supplémentaires (Q5 à Q8) peuvent être commandés par l'intermédiaire d'un transformateur (T2).

8. Convertisseur continu-continu selon l'une des revendications 6 ou 7, **caractérisé en ce que** les commutateurs à semi-conducteurs supplémentaires se composent, chacun, d'une mise série de deux transistors à effet de champ (Q5, Q6; Q7, Q8).

9. Convertisseur continu-continu selon la revendication 5, **caractérisé en ce que** les bornes d'enroulement supplémentaires, de préférence les extrémités d'enroulement, de l'un des enroulements sont en outre reliées, par l'intermédiaire de commutateurs à semi-conducteurs supplémentaires (Q5 à Q8), à la première borne (A1), l'activation des commutateurs à semi-conducteurs supplémentaires (Q5 à Q8) s'effectuant en fonction du sens de conversion et en opposition de phase par rapport à l'activation du commutateur à semi-conducteurs (Q1, Q3) respectivement relié à la même borne d'enroulement, et **en ce que** la prise centrale du même enroulement peut être reliée, en fonction du sens de conversion et par l'intermédiaire d'un troisième commutateur à semi-conducteurs (Q9, Q10), à la première borne, l'activation des commutateurs à semi-conducteurs supplémentaires (Q5 à Q8) n'ayant pas lieu lorsque le troisième commutateur à semi-conducteurs (Q9, Q10) est conducteur.

10. Convertisseur continu-continu selon la revendication 9, **caractérisé en ce que** les commutateurs à semi-conducteurs supplémentaires et le troisième commutateur à semi-conducteurs se composent, chacun, d'une mise en série de deux transistors à effet de champ (Q5, Q6; Q7, Q8; Q9, Q10).

11. Convertisseur selon la revendication 5, **caractérisé en ce que** les bornes d'enroulement supplémentaires, de préférence les extrémités d'enroulement, de l'un des enroulements sont en outre reliées, par l'intermédiaire de diodes à redresseur (D2, D3) à la première borne (A1) et **en ce que** la prise centrale du même enroulement peut être reliée, en fonction du sens de conversion et par l'intermédiaire d'un troisième commutateur à semi-conducteurs (Q9, Q10), à la première borne (A1).

12. Convertisseur continu-continu selon la revendication 6, **caractérisé en ce que** les commutateurs à semi-conducteurs supplémentaires sont formés par une combinaison de diodes et de transistors, une borne d'extrémité de l'enroulement étant respectivement reliée à une diode (D4, D5).

13. Convertisseur continu-continu selon la revendication 12, **caractérisé en ce que** les anodes des diodes (D4, D5) sont reliées à une borne de drain d'un transistor (Q11) dont la grille est commutée par une génératrice pilote (G2).
